# EUROPEAN PATENT APPLICATION

(11) **EP 4 484 280 A1**
(43) Date of publication of application: **01.01.2025**
(21) Application number: 23182703.1
(22) Date of filing: 30.06.2023
(51) Int. Cl.: B64C 9/02, B64C 9/18

(54) **TRAILING EDGE SYSTEM FOR AN AIRCRAFT AND METHOD FOR MANUFACTURING A TRAILING EDGE SYSTEM**

(71) Applicant: Airbus Operations GmbH, 21129 Hamburg (DE)
(72) Inventor: Lorenz, Florian, 21129 Hamburg (DE); Andreani, Luc, 21129 Hamburg (DE)

(57) **Abstract**

The invention relates to a trailing edge system (10). The system (10) comprises a wing structure (12), a trailing edge movable (20) which is movably coupled to the wing structure (12), and a first flexible panel element (30) which seals a gap (21) between an outer surface (16) of the wing structure (12) and the trailing edge movable (20). The first flexible panel element (30) establishes a contact (36) between a first end (33) of the first flexible panel element (30) and a surface of the trailing edge movable (20). The first flexible panel element (30) is deflected by a movement of the trailing edge movable (20) relative to the wing structure (12) when the first end (33) of the first flexible panel element (30) is in contact with the surface of the trailing edge movable (20). The invention also relates to a method for manufacturing a trailing edge system (10).

## Description

### Field of the invention

The invention generally relates to movable flap systems. In particular, the invention relates to a trailing edge system for an aircraft and a method for manufacturing a trailing edge system.

### Technical Background

Movables like flap components for aircraft are usually exposed to strong aerodynamic loads during operation of the aircraft. For example, flap components are attached at a trailing edge region of an aircraft wing and provide specified cruise and high-lift configurations, wherein the flap components are adapted to be retracted and deployed depending on the current flight condition. Modern high-lift trailing edge systems use flap components which rotate and perform a fowler motion to set up the specified high-lift wing configurations. One important aerodynamic parameter is the gap between the flap surface and the wing surface, i.e., the so-called shroud line, since this gap considerably affects the airflow in the trailing edge regions. In order to design the gap for the different settings, either the movement of the flap component in relation to the shroud can be tailored or the shroud can be mechanically adapted.

US 2012/0012696 A1 describes an aircraft flap actuator assembly which includes at least one fixed support, at least one track having a curvilinear track surface connected to the fixed support, at least one flap support adapted to traverse the curvilinear track surface, a trailing edge flap connected to the at least one flap support and a flap actuator engaging the at least one flap support.

US 6,076,775 A describes a lifting airfoil such as an aircraft wing with a landing flap that forms at least a portion of a trailing edge of the airfoil and that is movably connected to the main body of the airfoil, wherein the landing flap has a flap leading edge nose and a flap trailing edge body and is bounded by a pressure-side cover skin and a vacuum-side cover skin.

### Summary of the invention

It may be seen as an object of the invention to improve the aerodynamic characteristics of a trailing edge system.

A system and a method according to the features of the independent claims are provided. Further embodiments of the invention are evident from the dependent claims and from the following description.

According to an aspect of the invention, a trailing edge system, e.g., a flap system, for an aircraft is provided. The trailing edge system comprises a wing structure having a skin section with an aerodynamic outer surface. The trailing edge system further comprises a trailing edge movable, for example a flap component, which is movably coupled to the wing structure and which is movable relative to the wing structure between a retracted position and an extended position. The trailing edge system further comprises a first flexible panel element which is arranged to at least partially seal a gap between the outer surface of the wing structure and the trailing edge movable. The first flexible panel element is configured to interact with the trailing edge movable by establishing a contact between a first end of the first flexible panel element and a surface of the trailing edge movable. The first flexible panel element is configured to be deflected by a movement of the trailing edge movable relative to the wing structure when the first end of the first flexible panel element is in contact with the surface of the trailing edge movable.

The inventive trailing edge system may be seen as an approach or concept to provide an improved seal or cover for a gap between the outer surface of the wing structure and a flap component coupled to the wing structure. In particular, a flexibility or pre-tension of the first flexible panel element allows the first flexible panel element to adapt to different configurations, e.g., different positions and/or orientations, of the flap component with respect to the wing structure, while reliably sealing or covering the gap between the outer surface of the wing structure and the flap component, at least during a partial movement of the flap component.

This improved sealing or covering of the gap between the outer surface of the wing structure and the flap component may positively influence an air flow in the trailing edge region of an aircraft wing, in particular, in the transition region between the aerodynamic outer surface of the wing skin and the aerodynamic outer surface of the flap skin, thereby reducing the drag and further improving aerodynamic high-lift characteristics of the trailing edge system.

The trailing edge system comprises the wing structure which may be seen as the base system to which the trailing edge movable is movably coupled. The wing structure has a skin section with an aerodynamic outer surface. In particular, the wing structure has an aerodynamic upper surface and an aerodynamic lower surface. The upper and lower surfaces may be connected to each other via a leading edge at the front of the wing structure and via a trailing edge at the rear of the wing structure. The at least one trailing edge movable may be a flap component, e.g., a flap or part of a flap, and may be arranged at the rear of the wing structure. Multiple trailing edge movables may together form a trailing edge unit. For example, multiple trailing edge movables are arranged next to each other along a spanwise extension direction of the wing structure. However, multiple trailing edge movables may also be arranged next to each other along a chordwise extension direction of the wing structure, wherein the trailing edge movables provide a series of trailing edge movables coupled to each other.

The trailing edge movable is configured to move relative to the wing structure between the retracted position and the extended position, wherein the gap between the wing structure and the trailing edge movable changes the geometrical appearance during the movement. In particular, the gap size increases when the trailing edge movable is moved from the retracted position to the extended position and decreases when the trailing edge movable is moved from the extended position to the retracted position. The retracted position may herein also be referred to as retracted configuration and the extended position may herein also be referred to as extended configuration.

The first flexible panel element may be arranged at the aerodynamic outer surface of the wing structure and may extend in a downstream direction of the wing structure to span or cover at least a part of the gap between the wing structure and the trailing edge movable. For example, the first flexible panel element can be attached to a lower surface of the skin section of the wing structure.

The first flexible panel element may comprise a predetermined flexibility and/or pre-tension after manufacturing the same. It may comprise a fiber-reinforced material, for example a fiber-reinforced plastic material like carbon fiber-reinforced plastics. However, it may also comprise a metallic material or combinations of fiber-reinforced materials and metallic materials. The first flexible panel element may be manufactured using a molding process in which it is pre-formed or pre-shaped. The first flexible panel element may have a sheet-like or plate-like shape.

Due to the flexibility and/or pre-tension of the first flexible panel element, it may be configured to be bent or deflected when it comes into contact with and is pushed against the outer surface of the trailing edge movable, during movement of the trailing edge movable with respect to the wing structure. It is possible that the first flexible panel element is in contact with the outer surface of the trailing edge movable when the trailing edge movable is in the most retracted position and remains in contact with the outer surface of the trailing edge movable during movement of the trailing edge movable up to an intermediate position where the first flexible panel element loses contact to and is separated from the outer surface of the trailing edge movable, i.e., where the contact between the first flexible panel element and the outer surface of the trailing edge movable ends. Consequently, between the intermediate position and the extended position, there may be no contact between the first flexible panel element and the outer surface of the trailing edge movable. That is, there may be a contact phase where the gap between the aerodynamic outer surface of the wing structure and the outer surface of the trailing edge movable is covered, e.g., sealed, by the first flexible panel element, and a non-contact phase where there is a gap between the first flexible panel element and the outer surface of the trailing edge movable.

According to an embodiment, the first flexible panel element is configured such that a contact pressure between the first end of the first flexible panel element and the surface of the trailing edge movable changes when the trailing edge movable is moved relative to the wing structure.

For example, the contact pressure between the first end of the first flexible panel element and the surface of the trailing edge movable increases when the trailing edge movable is moved from the retracted position to a position, e.g., the above-mentioned intermediate position, where the contact between the first end of the first flexible panel element and the outer surface of the trailing edge movable ends. In other words, the contact pressure increases during the above-mentioned contact phase, i.e., when the trailing edge movable starts moving from the retracted position to the extended position.

It is possible that the highest contact pressure occurs immediately before the first end of the first flexible panel element loses contact to the outer surface of the trailing edge movable. At the moment, when the first end of the first flexible panel element loses contact to the outer surface of the trailing edge movable, the first flexible panel element may relax and move back, for example swing back, to a neutral or unloaded state as will be explained in the following.

According to an embodiment, the first flexible panel element is configured to be deflected from a neutral position to a deflected position, wherein the neutral position is representative for an unloaded state of the first flexible panel element which the first flexible panel element adopts when the first end of the first flexible panel element is spatially separated from the surface of the trailing edge movable, and wherein the deflected position is representative for a loaded state of the first flexible panel element which the first flexible panel element adopts when the first end of the first flexible panel element is in contact with the surface of the trailing edge movable.

The first flexible element may be arranged, e.g., attached to or integrally formed with, the aerodynamic outer surface of the wing structure and may be pushed, pressed or urged against the outer surface of the trailing edge movable depending on the current configuration, e.g., position and/or orientation, of the trailing edge movable. In particular, the loaded and deflected position may only occur when the first end of the first flexible panel element is in contact with the outer surface of the trailing edge movable, i.e., during the contact phase, whereas the unloaded and undeflected neutral position may only occur when the first end of the first flexible panel element is not in contact with the outer surface of the trailing edge movable, i.e., during the non-contact phase. It is noted that, in the non-contact phase, there may be a slight deflection due to the surrounding air flow, but this slight deflection due to the surrounding air flow will be generally neglected for the purposes described herein.

According to an embodiment, the first flexible panel element defines a curved shape in the neutral position.

That is, the first flexible panel element may be pre-formed or pre-shaped to have a curved contour when no external loads are applied on the first flexible panel element. It is thus possible that the first flexible panel element has the maximum curvature in the unloaded condition, for example when the trailing edge movable is in the extended position. It is thus also possible that the first flexible panel element has the minimum curvature or highest loading/tension immediately before the first end of the first flexible panel element loses contact to the outer surface of the trailing edge movable, e.g., when the trailing edge movable is positioned in an intermediate position that for instance is representative for a cruise configuration of the trailing edge movable.

According to an embodiment, the first end of the first flexible panel element is in contact with the surface of the trailing edge movable when the trailing edge movable is in the retracted position.

The retracted position may be representative for a position of the trailing edge movable relative to the wing structure in which the wing chord is minimal, e.g., when the trailing edge movable is in the most retracted position. During the entire contact phase, the first end of the first flexible panel element may be pressed, pushed or urged against the outer surface of the trailing edge movable due to the pre-tension of the first flexible panel element.

According to an embodiment, the first end of the first flexible panel element is spatially separated from the surface of the trailing edge movable when the trailing edge movable is in the extended position.

In this configuration, there may be a gap between the first end of the first flexible panel element and the outer surface of the trailing edge movable.

According to an embodiment, the trailing edge movable is movable relative to the wing structure from the retracted position to the extended position via an intermediate position, e.g., the above-mentioned intermediate position, that defines a position of the trailing edge movable between the retracted position and the extended position, wherein the first end of the first flexible panel element is in contact with the surface of the trailing edge movable during a movement of the trailing edge movable from the retracted position to the intermediate position, and wherein the first end of the first flexible panel element is spatially separated from the surface of the trailing edge movable during a movement of the trailing edge movable from the intermediate position to the extended position.

The intermediate position may correspond to a so-called clean configuration which may define a position of the trailing edge movable during cruise flight. The contact between the first flexible panel element and the surface of the trailing edge movable may be maintained during the entire movement between the retracted position and the intermediate position, while in the extended position, for example a starting or landing configuration of the trailing edge movable, there may be no contact anymore between the first flexible panel element and the surface of the trailing edge movable.

According to an embodiment, the first flexible panel element is arranged to at least partially seal the gap between a lower surface of the wing structure and a lower surface of the trailing edge movable.

In particular, a lower contour of an aircraft wing may be defined by the lower aerodynamic outer surface of the wing structure, the lower outer surface of the trailing edge movable and the first flexible panel element that spans and thus covers or seals the gap between the lower surfaces of the wing structure and the trailing edge movable.

According to an embodiment, the first flexible panel element has a second end which is attached to the wing structure.

The first flexible panel element may be attached to the wing structure using any attachment mechanism, for example a riveted attachment, a screwed attachment, a bolted attachment, etc. The first flexible panel element may also be attached to the wing structure using an adhesive bond or a weld connection.

According to an embodiment, first flexible panel element is integrally formed with the wing structure.

For example, the first flexible panel element may be an extension of the aerodynamic skin section of the wing structure, which extension may comprise the same or different material characteristics as the skin section. For example, the extension of the skin section that represents the first flexible panel element may comprise a different elasticity or flexibility when compared to the skin section.

According to an embodiment, the first flexible panel element comprises a lever arm, wherein the first flexible panel element is further configured to be deflected by a movement of the trailing edge movable against the lever arm such that the first end of the first flexible panel element is urged against the surface of the trailing edge movable.

The first flexible panel element may comprise a longitudinally extending main element. The lever arm may be a part of the first flexible panel element which is arranged substantially perpendicular with respect to the longitudinally extending main element of the first flexible panel element. For example, when a nose of the trailing edge movable is pushed against the lever arm, then the longitudinally extending main element will be deflected and pressed or pushed against the (lower) outer surface of the trailing edge movable. The lever arm may have higher rigidity that the longitudinally extending main element of the first flexible panel element.

According to an embodiment, the trailing edge system further comprises a second flexible panel element which is arranged to at least partially seal or cover a gap between an upper surface of the wing structure and an upper surface of the trailing edge movable.

In particular, an upper contour of an aircraft wing may be defined by the upper aerodynamic outer surface of the wing structure, the upper outer surface of the trailing edge movable and the second flexible panel element that spans and thus covers or seals the gap between the upper surfaces of the wing structure and the trailing edge movable.

Consequently, the second flexible panel element is arranged to seal a gap, e.g., a second gap, between the upper surface of the wing structure and the upper surface of the trailing edge movable, whereas the first flexible panel element is arranged to seal a gap, e.g., a first gap, between the lower surface of the wing structure and the lower surface of the trailing edge movable.

According to an embodiment, the second flexible panel element is configured to interact with the trailing edge movable by establishing a contact between a first end of the second flexible panel element and the upper surface of the trailing edge movable, wherein the second flexible panel element is configured to be deflected by a movement of the trailing edge movable relative to the wing structure when the first end of the second flexible panel element is in contact with the upper surface of the trailing edge movable.

Preferably, all the above-mentioned features and functions of the first flexible panel element also apply to the second flexible panel element.

According to an aspect, an aircraft wing comprising the trailing edge system as described herein is provided, wherein the trailing edge system is arranged at a trailing edge region of the aircraft wing.

In an example, an aircraft comprising the trailing edge system as described herein is provided.

According to another aspect, a method for manufacturing a trailing edge system is provided. In a step of the method, a wing structure having a skin section with an aerodynamic outer surface is provided. In another step, a trailing edge movable is coupled to the wing structure such that the trailing edge movable is movable relative to the wing structure between a retracted position and an extended position. In yet another step, a first flexible panel element is arranged at the wing structure in order to at least partially seal a gap between the outer surface of the wing structure and the trailing edge movable. The first flexible panel element is configured to interact with the trailing edge movable by establishing a contact between a first end of the first flexible panel element and a surface of the trailing edge movable. The first flexible panel element is further configured to be deflected by a movement of the trailing edge movable relative to the wing structure when the first end of the first flexible panel element is in contact with the surface of the trailing edge movable. The method steps may be performed in the indicated order.

### Brief description of the drawings

The present invention will hereinafter be described in conjunction with the following drawing figures, wherein like numerals denote like elements, and wherein:
- Fig. 1: shows a cross-sectional view of a trailing edge system including flexible panel elements for sealing a gap between a wing structure and a trailing edge movable.
- Fig. 2: shows a cross-sectional view of a trailing edge system with different deflection states of the flexible panel elements of Fig. 1.
- Fig. 3: shows a cross-sectional view of the trailing edge system of Fig. 1, with the trailing edge movable in four different configurations.
- Fig. 4: shows a cross-sectional view of a trailing edge system including an alternative flexible panel element in a first state.
- Fig. 5: shows a cross-sectional view of the trailing edge system including the alternative flexible panel element of Fig. 4 in a second state.
- Fig. 6: shows an aircraft comprising a trailing edge system.
- Fig. 7: shows a flow diagram of a method for manufacturing a trailing edge system.

### Detailed description of exemplary embodiments

The representations and illustrations in the drawings are schematic and not to scale. A better understanding of the method and system described above may be obtained through a review of the illustrations accompanying this application together with a review of the detailed description that follows.

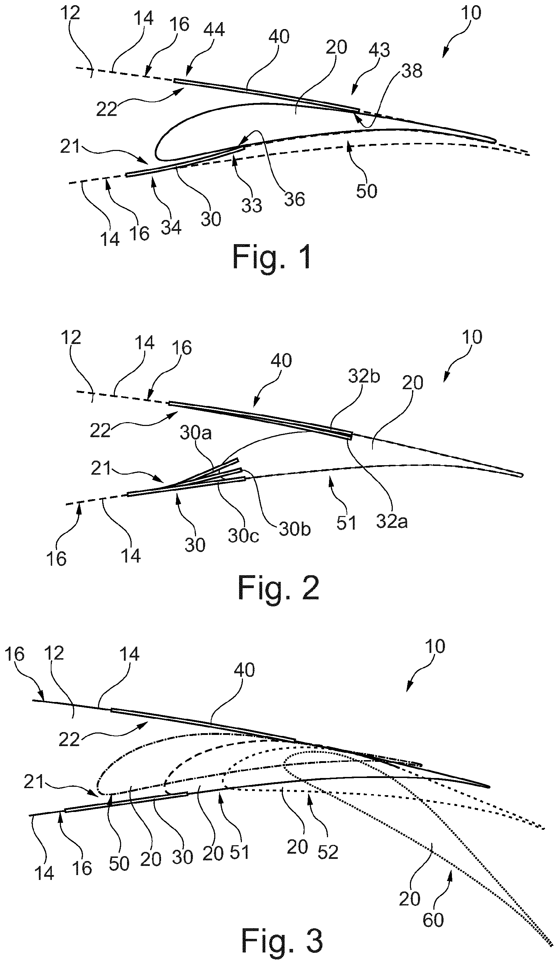

Fig. 1 shows a trailing edge system 10 for an aircraft. The trailing edge system 10 comprises a wing structure 12 having a skin section 14 with an aerodynamic outer surface 16. An outer contour of the trailing edge system 10 is indicated by a dashed line in Fig. 1. The trailing edge system 10 further comprises a trailing edge movable 20 which is movably coupled to the wing structure 12 and which is movable relative to the wing structure 12. For simplicity, Fig. 1 does not show the coupling mechanism which movably couples the trailing edge movable 20 to the wing structure 12. In Fig. 1, the trailing edge movable 20 is positioned in a retracted position 50. As will be shown with respect to Fig. 3, the trailing edge movable 20 can be extended or deployed to other positions, for example to an intermediate or clean configuration, or to high-lift configurations for starting and landing, respectively.

The trailing edge system 10 further comprises a first or lower flexible panel element 30 which is arranged to seal or cover a lower gap 21 between the lower surface 16 of the wing structure 12 and the trailing edge movable 20. The first flexible panel element 30 interacts with the trailing edge movable 20 by establishing a contact 36 between a first end 33 of the first flexible panel element 30 and a lower surface of the trailing edge movable 20. Furthermore, the first flexible panel element 30 is attached to or integrally formed with the lower skin section 14 of the wing structure 12 via a second end 34. When the trailing edge movable 20 is in the retracted position 50 as shown in Fig. 1, the first flexible panel element 30 is deflected away from a neutral position due to the contact 36 between the first end 33 of the first flexible panel element 30 and the lower surface of the trailing edge movable 20. That is, the first flexible panel element 30 is in a loaded state where the first end 33 of the first flexible panel element 30 is pressed against the lower surface of the trailing edge movable 20 due to a pre-tension of the first flexible panel element 30. In other words, when the trailing edge movable 20 is in the retracted position 50 as shown in Fig. 1, the first end 33 of the first flexible panel element 30 is biased against the lower surface of the trailing edge movable 20, i.e., is pushed upwards in Fig. 1, and thus closes the lower gap 21 between the lower surface 16 of the wing structure 12 and the lower surface of the trailing edge movable 20. This provides an improved air flow along the lower surface of the entire trailing edge system 10. In particular, the airflow may be positively influenced and/or drag may be reduced by closing the lower gap 21 in this manner.

The trailing edge system 10 further comprises a second or upper flexible panel element 40 which is arranged to seal or cover an upper gap 22 between the upper surface 16 of the wing structure 12 and the trailing edge movable 20. The second flexible panel element 40 interacts with the trailing edge movable 20 by establishing a contact 38 between a first end 43 of the second flexible panel element 40 and an upper surface of the trailing edge movable 20. Furthermore, the second flexible panel element 40 is attached to or integrally formed with the upper skin section 14 of the wing structure 12, for example via a second end 44 of the second flexible panel element 40. When the trailing edge movable 20 is in the retracted position 50 as shown in Fig. 1, the second flexible panel element 30 is slightly deflected away from a neutral position due to the contact 38 between the first end 43 of the second flexible panel element 40 and the upper surface of the trailing edge movable 20. That is, the second flexible panel element 40 is in a loaded state where the first end 43 of the second flexible panel element 40 is pressed against the upper surface of the trailing edge movable 20 due to a pre-tension of the second flexible panel element 40. In other words, when the trailing edge movable 20 is in the retracted position 50 as shown in Fig. 1, the first end 43 of the first flexible panel element 40 is biased against the upper surface of the trailing edge movable 20, i.e., is pushed downwards in Fig. 1, and thus closes the upper gap 22 between the upper surface 16 of the wing structure 12 and the upper surface of the trailing edge movable 20. This provides an improved air flow along the upper surface of the entire trailing edge system 10. In particular, the airflow may be positively influenced and/or drag may be reduced by closing the upper gap 22 in this manner.

During a movement of the trailing edge movable 20 relative to the wing structure 12, in particular during a movement of the trailing edge movable 20 from the retracted configuration 50 to a more extended configuration, like the intermediate or clean configuration 51 as shown in Fig. 2, the first end 33 of the first flexible panel element 30 remains in contact with the lower surface of the trailing edge movable 20. However, the structural loading within the first flexible panel element 30 increases as it is bent to a more deflected state. In particular, the pre-tension of the first flexible panel element 30 is higher in the intermediate or clean configuration 51 as shown in Fig. 2 when compared to the retracted configuration 50 as shown in Fig. 1.

For a better understanding, Fig. 2 shows three different deflection states of the first flexible panel element 30 which will be explained in the following. The first flexible panel element 30 is configured to be deflected from a neutral position 30a to a first deflected position 30b and to a second deflected position 30c, the second deflected position 30c having a stronger deflection or higher than the first deflected position 30b. The neutral position 30a is representative for an unloaded state of the first flexible panel element 30 which the first flexible panel element 30 adopts when the first end 33 of the first flexible panel element 30 is spatially separated from the surface of the trailing edge movable 20, i.e., when the first end 33 of the flexible panel element 30 is not in contact with the surface of the trailing edge movable 20. The deflected positions 30b, 30c are representative for a loaded state of the first flexible panel element 30 which the first flexible panel element 30 adopts when the first end 33 of the first flexible panel element 30 is in contact with the surface of the trailing edge movable 20.

In the present case, when the trailing edge movable 20 is in the retracted configuration 50 as shown in Fig. 1, the first flexible panel element 30 adopts the first deflected position 30b (cf. Fig. 2). When the trailing edge movable 20 is moved, i.e., extended, to the intermediate or clean configuration 51 as shown in Fig. 2, the deflection of the first flexible panel element 30 increases and the first flexible panel element 30 adopts the second deflected position 30c. This also leads to an increasing pre-tension within the first flexible panel element 30 and, thus, to an increasing contact pressure between the first end 33 of the first flexible panel element 30 and the lower surface of the trailing edge movable 20. Fig. 1 also indicates the lower contour of the trailing edge system 10 as it would appear when the trailing edge movable 20 is in the intermediate or clean configuration 51 (cf. Fig. 2). It can be derived that the first flexible panel element 30 is pushed downwardly from the first deflected state 30b to the second deflected state 30c. This pushing occurs as a result of the contact between the first end 33 of the first flexible panel element 30 and the lower surface of the trailing edge movable 20 together with the movement of the trailing edge movable 20 from the retracted configuration 50 to the intermediate or clean configuration 51.

During a movement of the trailing edge movable 20 relative to the wing structure 12, in particular during a movement of the trailing edge movable 20 from the retracted configuration 50 to the intermediate or clean configuration 51 as shown in Fig. 2, the first end 43 of the second flexible panel element 40 also remains in contact with the upper surface of the trailing edge movable 20. Also in this case, the structural loading within the second flexible panel element 40 increases as it is bent to a more deflected state. In particular, the pre-tension of the second flexible panel element 40 is higher in the intermediate or clean configuration 51 as shown in Fig. 2 when compared to the retracted configuration 50 as shown in Fig. 1.

For a better understanding, Fig. 2 shows two different deflection states of the second flexible panel element 40 which will be explained in the following. The second flexible panel element 40 is configured to be deflected from a first deflected position 32a to a second deflected position 32b, the second deflected position 32b having a stronger or higher deflection than the first deflected position 32a. The deflected positions 32a, 32b are representative for a loaded state of the second flexible panel element 40 which the second flexible panel element 40 adopts when the first end 43 of the second flexible panel element 40 is in contact with the surface of the trailing edge movable 20.

In the present case, when trailing edge movable 20 is in the retracted configuration 50 as shown in Fig. 1, the second flexible panel element 40 adopts the first deflected position 32a (cf. Fig.2). When the trailing edge movable 20 is moved, i.e., extended, to the intermediate or clean configuration 51 as shown in Fig. 2, the deflection of the second flexible panel element 40 increases and the second flexible panel element 40 adopts the second deflected position 32b. This also leads to an increasing pre-tension within the second flexible panel element 40 and, thus, to an increasing contact pressure between the first end 43 of the second flexible panel element 40 and the upper surface of the trailing edge movable 20. It can be derived that the second flexible panel element 40 is pushed upwardly from the first deflected state 32a to the second deflected state 32b. This pushing occurs as a result of the contact between the first end 43 of the second flexible panel element 40 and the upper surface of the trailing edge movable 20 together with the movement of the trailing edge movable 20 from the retracted configuration 50 to the intermediate or clean configuration 51.

Fig. 3 shows the trailing edge system 10 of Fig. 1, with the trailing edge movable 20 in four different configurations. In particular, Fig. 3 shows the retracted configuration 50 of the trailing edge movable 20 as explained with respect to Fig. 1. Furthermore, Fig. 3 shows the intermediate or clean configuration 51 of the trailing edge movable 20 as explained with respect to Fig. 2. Furthermore, Fig. 3 shows a first high-lift configuration 52 that may represent a starting configuration 50 of the trailing edge movable 20 as well as a second high-lift configuration 60 that may represent a landing configuration 60 of the trailing edge movable 20.

In an example, the intermediate or clean configuration 51 of the trailing edge movable 20 may be used during cruise flight of the aircraft. The retracted configuration 50 trailing edge movable 20 may also be used during cruise flight of the aircraft and provides a reduced wing chord when compared to the intermediate or clean configuration 51 of the trailing edge movable 20. In other words, the trailing edge movable 20 is capable of driving forward, starting from a clean wing configuration with the aim of reducing the local wing chord. The first high-lift configuration 52 of the trailing edge movable 20 may be used during a starting or take-off phase of the aircraft and the second high-lift configuration 60 of the trailing edge movable 20 may be used during a landing phase of the aircraft.

In an example, the first and second flexible panel elements 30, 40 may contact the respective surfaces of the trailing edge movable 20 only when the trailing edge movable 20 is in the retracted configuration 50 and the intermediate or clean configuration 51, in particular, during a movement of the trailing edge movable 20 between the retracted configuration 50 and the intermediate or clean configuration 51, wherein the deflection states of the first and second flexible panel elements 30, 40 may vary as explained above.

In an example, the first and second flexible panel elements 30, 40 may be spatially separated from the respective surfaces of the trailing edge movable 20, i.e., there is no contact between the first/second flexible panel elements 30, 40 and the respective surfaces of the trailing edge movable 20, when the trailing edge movable 20 is positioned in the first and second high-lift configurations 52, 60. Therefore, the first and second flexible panel elements 30, 40 are in contact with the respective outer surfaces of the trailing edge movable 20 when the trailing edge movable 20 is in the most retracted position 60 and remain in contact with the respective outer surfaces of the trailing edge movable 20 during movement of the trailing edge movable 20 up to the intermediate or clean configuration 51 where the first and second flexible panel elements 30, 40 lose contact to and are separated from the respective outer surfaces of the trailing edge movable 20.

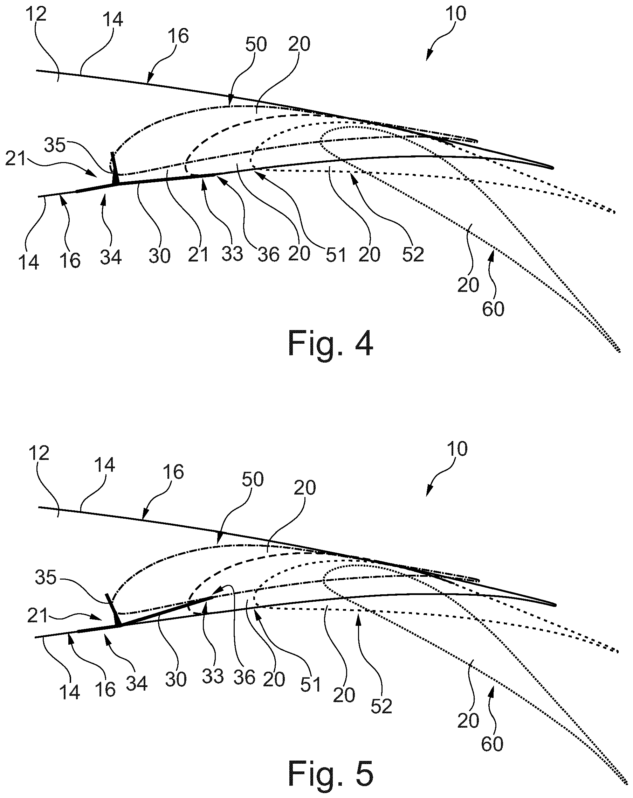

Figs. 4 and 5 show the trailing edge system 10 including an alternative example for the first flexible panel element 30 in two different deflection states. The features and functions regarding the first flexible panel element 30 as explained with respect to Figs. 1 to 3 generally also apply to the alternative first flexible panel element 30 described with respect to Figs. 4 and 5.

In particular, Figs. 4 and 5 show that the first flexible panel element 30 comprises a lever arm 35, wherein the first flexible panel element 30 is further configured to be deflected by a movement of the trailing edge movable 20 against the lever arm 35 such that the first end 33 of the first flexible panel element 30 is urged against the lower surface of the trailing edge movable 20. As can be derived from Figs. 4 and 5, the first flexible panel element 30 may comprise a longitudinally extending main element that extends to the first end 33. The lever arm 35 is a structural part of the first flexible panel element 30 and is arranged substantially perpendicular with respect to the longitudinally extending main element of the first flexible panel element 30.

For example, Fig. 4 shows the first flexible panel element 30 when the trailing edge movable 20 is in the intermediate or clean configuration 51. In this configuration, the first end 33 of the first flexible panel element 30 is pushed downwardly by the lower surface of the trailing edge movable 20. When the trailing edge movable 20 is moved from the intermediate or clean configuration 51 (cf. Fig. 4) to the retracted configuration 50 (cf. Fig. 5), there will be a point in time when a nose of the trailing edge movable 20 contacts the lever arm 35 and then pushes against the lever arm 35, which results in an upward movement of the longitudinally extending main element and thus the first end 33 of the first flexible panel element 30. As a consequence, the first end 33 of the first flexible panel element 30 can be more strongly pressed or pushed against the lower surface of the trailing edge movable 20. In this situation, there may be an increased bending of the longitudinally extending main element of the first flexible panel element 30 in the region where the lever arm 35 branches off the longitudinally extending main element. The rigidity in this region of the longitudinally extending main element may be less than the rigidity of the longitudinally extending main element in other regions, like in the region of the first end 33, for example.

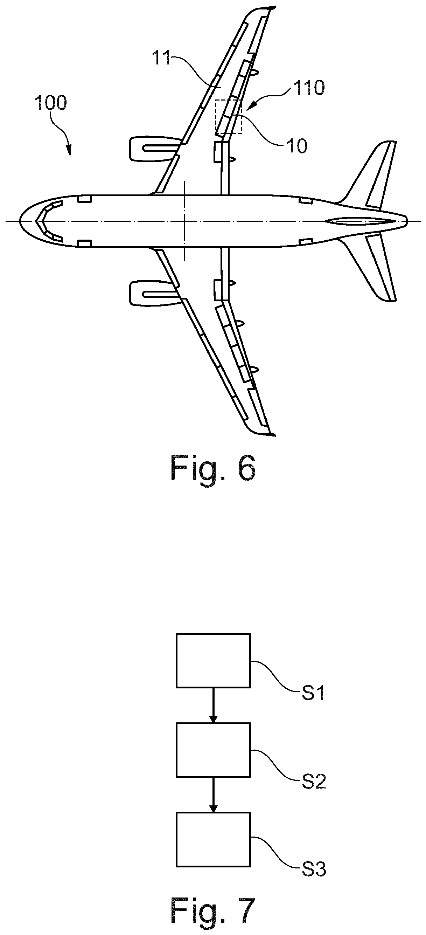

Fig. 6 shows an aircraft 100 comprising the trailing edge system 10 as explained above with respect to Figs. 1 to 5. The aircraft 100 comprises an aircraft wing 11, wherein the trailing edge system 10 is arranged at a trailing edge region 110 of the aircraft wing 11.

In particular, the trailing edge system 10 may be part of or coupled to the aircraft wing 11.

Fig. 7 shows a flow diagram of a method for manufacturing a trailing edge system, for example the trailing edge system 10 as explained above with respect to Figs. 1 to 5. A step S1 of the method comprises providing a wing structure 12 having a skin section 14 with an aerodynamic outer surface 16. Another step S2 of the method comprises coupling a trailing edge movable 20 to the wing structure 12 such that the trailing edge movable 20 is movable relative to the wing structure 12 between a retracted position 50 and an extended position 60. Another step S3 of the method comprises arranging a first flexible panel element 30 at the wing structure 12 in order to at least partially seal a gap 21 between the outer surface 16 of the wing structure 12 and the trailing edge movable 20. The first flexible panel element 30 is configured to interact with the trailing edge movable 20 by establishing a contact 36 between a first end 33 of the first flexible panel element 30 and a surface of the trailing edge movable 20. The first flexible panel element 30 is configured to be deflected by a movement of the trailing edge movable 20 relative to the wing structure 12 when the first end 33 of the first flexible panel element 30 is in contact with the surface of the trailing edge movable 20.

## Claims

1. A trailing edge system (10) for an aircraft (100), comprising:
a wing structure (12) having a skin section (14) with an aerodynamic outer surface (16);
a trailing edge movable (20) which is movably coupled to the wing structure (12) and which is movable relative to the wing structure (12) between a retracted position (50) and an extended position (60);
a first flexible panel element (30) which is arranged to at least partially seal a gap (21) between the outer surface (16) of the wing structure (12) and the trailing edge movable (20);
wherein the first flexible panel element (30) is configured to interact with the trailing edge movable (20) by establishing a contact (36) between a first end (33) of the first flexible panel element (30) and a surface of the trailing edge movable (20);
wherein the first flexible panel element (30) is configured to be deflected by a movement of the trailing edge movable (20) relative to the wing structure (12) when the first end (33) of the first flexible panel element (30) is in contact with the surface of the trailing edge movable (20).

2. The trailing edge system (10) according to claim 1,
wherein the first flexible panel element (30) is configured such that a contact pressure between the first end (33) of the first flexible panel element (30) and the surface of the trailing edge movable (20) changes when the trailing edge movable (20) is moved relative to the wing structure (12).

3. The trailing edge system (10) according to any one of the preceding claims,
wherein the first flexible panel element (30) is configured to be deflected from a neutral position (30a) to a deflected position (30b, 30c),
wherein the neutral position (30a) is representative for an unloaded state of the first flexible panel element (30) which the first flexible panel element (30) adopts when the first end (33) of the first flexible panel element (30) is spatially separated from the surface of the trailing edge movable (20);
wherein the deflected position (30b, 30c) is representative for a loaded state of the first flexible panel element (30) which the first flexible panel element (30) adopts when the first end (33) of the first flexible panel element (30) is in contact with the surface of the trailing edge movable (20).

4. The trailing edge system (10) according to claim 3,
wherein, in the neutral position (30a), the first flexible panel element (30) defines a curved shape.

5. The trailing edge system (10) according to any one of the preceding claims,
wherein the first end (33) of the first flexible panel element (30) is in contact with the surface of the trailing edge movable (20) when the trailing edge movable (20) is in the retracted position (50).

6. The trailing edge system (10) according to any one of the preceding claims,
wherein the first end (33) of the first flexible panel element (30) is spatially separated from the surface of the trailing edge movable (20) when the trailing edge movable (20) is in the extended position (60).

7. The trailing edge system (10) according to any one of the preceding claims,
wherein the trailing edge movable (20) is movable relative to the wing structure (12) from the retracted position (50) to the extended position (60) via an intermediate position (51) that defines a position of the trailing edge movable (20) between the retracted position (50) and the extended position (60);
wherein the first end (33) of the first flexible panel element (30) is in contact with the surface of the trailing edge movable (20) during a movement of the trailing edge movable (20) from the retracted position (50) to the intermediate position (51);
wherein the first end (33) of the first flexible panel element (30) is spatially separated from the surface of the trailing edge movable (20) during a movement of the trailing edge movable (20) from the intermediate position (51) to the extended position (60).

8. The trailing edge system (10) according to any one of the preceding claims,
wherein the first flexible panel element (30) is arranged to at least partially seal the gap (21) between a lower surface of the wing structure (12) and a lower surface of the trailing edge movable (20).

9. The trailing edge system (10) according to any one of the preceding claims,
wherein the first flexible panel element (30) has a second end (34) which is attached to the wing structure (12).

10. The trailing edge system (10) according to any one of claims 1 to 8,
wherein first flexible panel element (30) is integrally formed with the wing structure (12).

11. The trailing edge system (10) according to any one of the preceding claims, wherein the first flexible panel element (30) comprises a lever arm (35); wherein the first flexible panel element (30) is further configured to be deflected by a movement of the trailing edge movable (20) against the lever arm (35) such that the first end (33) of the first flexible panel element (30) is urged against the surface of the trailing edge movable (20).

12. The trailing edge system (10) according to any one of the preceding claims, further comprising:
a second flexible panel element (40) which is arranged to at least partially seal a gap (22) between an upper surface of the wing structure (12) and an upper surface of the trailing edge movable (20).

13. The trailing edge system (10) according to claim 12,
wherein the second flexible panel element (40) is configured to interact with the trailing edge movable (20) by establishing a contact (38) between a first end (43) of the second flexible panel element (40) and the upper surface of the trailing edge movable (20);
wherein the second flexible panel element (40) is configured to be deflected by a movement of the trailing edge movable (20) relative to the wing structure (12) when the first end (43) of the second flexible panel element (40) is in contact with the upper surface of the trailing edge movable (20).

14. An aircraft wing (11) comprising the trailing edge system (10) according to any one of the preceding claims;
wherein the trailing edge system (10) is arranged at a trailing edge region (110) of the aircraft wing (11).

15. A method for manufacturing a trailing edge system (10), comprising:
providing a wing structure (12) having a skin section (14) with an aerodynamic outer surface (16, S1);
coupling a trailing edge movable (20) to the wing structure (12) such that the trailing edge movable (20) is movable relative to the wing structure (12) between a retracted position (50) and an extended position (60, S2);
arranging a first flexible panel element (30) at the wing structure (12) in order to at least partially seal a gap (21) between the outer surface (16) of the wing structure (12) and the trailing edge movable (20, S3);
wherein the first flexible panel element (30) is configured to interact with the trailing edge movable (20) by establishing a contact (36) between a first end (33) of the first flexible panel element (30) and a surface of the trailing edge movable (20);
wherein the first flexible panel element (30) is configured to be deflected by a movement of the trailing edge movable (20) relative to the wing structure (12) when the first end (33) of the first flexible panel element (30) is in contact with the surface of the trailing edge movable (20).
